## Europäisches Patentamt

## European Patent Office

## Office européen des brevets

(19)

(11) Veröffentlichungsnummer: **0 057 000**
B1

(12)

# EUROPÄISCHE PATENTSCHRIFT

(45) Veröffentlichungstag der Patentschrift:
**22.08.84**

(51) Int. Cl.³: **B 29 C 25/00**, B 29 C 17/02

(21) Anmeldenummer: **82100466.0**

(22) Anmeldetag: **23.01.82**

(54) **Verfahren zur Herstellung von Kunststoffverformungen.**

(30) Priorität: **26.01.81 DE 3102475**

(43) Veröffentlichungstag der Anmeldung:
**04.08.82 Patentblatt 82/31**

(45) Bekanntmachung des Hinweises auf die Patenterteilung:
**22.08.84 Patentblatt 84/34**

(84) Benannte Vertragsstaaten:
**AT BE CH DE FR GB IT LI LU NL SE**

(56) Entgegenhaltungen:
**EP - A - 0 021 438**
**EP - A - 0 026 973**
**DE - A - 1 504 932**
**DE - A - 2 513 863**
**DE - A - 2 824 531**
**DE - B - 1 679 826**
**DE - C - 875 404**
**GB - A - 1 158 011**
**GB - A - 1 514 500**
**GB - A - 1 576 505**
**US - A - 2 494 273**
**US - A - 3 370 112**

(73) Patentinhaber: **Wirsbo Pex Zweigniederlassung der Platzer Schwedenbau GmbH, Ernst-Leitz-Strasse 18, D-6056 Heusenstamm (DE)**

(72) Erfinder: **Imgram, Friedrich, Am Frankfurter Weg 2, D-6056 Heustenstamm (DE)**

(74) Vertreter: **Linser, Heinz et al, Patentanwälte Heinz Linser Dipl. Ing. Eckhardt Eyer Robert-Bosch-Strasse 12a Postfach 10 22 10, D-6072 Dreieich (DE)**

ACTORUM AG

## Beschreibung

Die Erfindung betrifft ein Verfahren zur Herstellung eines rohrförmigen Gegenstandes, wobei ein Thermoplast in Form eines Pulvers oder Granulats unter Zusatz von chemischen Vernetzungsmitteln sowie Zusatz- und Hilfsstoffen in einer Druckkammer einem Hochdruck unterworfen wird, wodurch die Temperatur der Mischung auf ca. 110° C ansteigt, worauf die Mischung durch Kanäle einer Strangpressvorrichtung geführt und noch innerhalb der Strangpressvorrichtung auf Vernetzungstemperatur erwärmt wird.

Ein derartiges Verfahren ist bereits aus der DE-B Nr. 1679826 bekannt. Ein weiteres Verfahren ähnlicher Art zur Herstellung geformter, vernetzter polyolefinischer Materialien durch Strangpressen geht aus der EP-A1 Nr. 0033587 hervor. Mit diesen bekannten Verfahren wird eine homogene Verteilung des Vernetzungsmittels in der Pressmasse in besonders vorteilhafter Weise sichergestellt, wodurch die Herstellung eines durchgehend gleichmässig vernetzten Produktes ermöglicht wird. Einsolches Produkt ist für die vorliegende Erfindung besonders vorteilhaft.

Zum Transport strömungsfähiger Medien, beispielsweise im Heizungs- oder Sanitärbereich, finden zunehmend Kunststoffprodukte und insbesondere Kunststoffrohre Anwendung. Diese Materialien weisen eine hervorragende Langzeitbeständigkeit auch bei hohen Temperaturen und Drücken auf und sind gegen die meisten sowohl im Sanitär- als auch im Heizungsbereich vorkommenden Zusätze beständig. Sollen beispielsweise die Rohre bei der Installation einer starken Biegung unterworfen werden, um etwa mit Armaturen versehen in eine Anordnung eingebaut zu werden, so müssen die Rohre in gebogenen Zustand fixiert und ggf. eingegossen werden, da relativ starke Rückstellkräfte im Rohr und in den Schläuchen vorhanden sind, welche einer starken Biegung entgegenwirken. Wird ein derartiges Rohr beispielsweise einer Abwinkelung unterworfen, so entsteht eine Knickstelle mit einem verringerten Querschnitt, wodurch ein erhöhter Strömungswiderstand erzeugt wird.

Bestimmte Verformungen lassen sich nachträglich spannungsfrei überhaupt nicht oder nur mit grossen Schwierigkeiten anfertigen.

Die Lösung dieser Aufgabe erfolgt bei der vorliegenden Erfindung dadurch, dass der extrudierte Hohlstrang im gleichen Arbeitsprozess kontinuierlich durch ein Formwerkzeug gezogen wird, wodurch eine Verstreckung des Hohlkörpers um mehr als 10, vorzugsweise 20%, erfolgt, und in der gestreckten Form gekühlt und damit in dieser Form fixiert wird; der so erhaltene Hohlstrang wird auf Länge geschnitten und partiell über den Kristallitschmelzpunkt erwärmt, worauf die erwärmte Stelle auf die in der Strangpresse festgelegte Form zurückstrebt, und so den rohrförmigen Hohlkörper bildet.

Die Wärmebehandlung des Kunststoffproduktes erfolgt in Weiterbildung der Erfindung mit Hilfe eines Luftstromes einer Temperatur von über 140° C.

Zur Herstellung einer bleibenden Rohrerweiterung, Rohrbiegung oder Rohrabwinkelung wird gemäss der Erfindung das gestreckte Rohr an den zu verformenden Stellen partiell erwärmt.

Nach der Erfindung lassen sich Rohrformstücke herstellen, welche innerhalb eines Rohrabschnitte eine Aufweitungszone um den gesamten Rohrumfang aufweisen.

Weiterhin lassen sich mit der Erfindung Rohrformstücke herstellen, welche innerhalb eines Rohrabschnittes als Venturi-Düse mit einem sich verengenden und anschliessend sich allmählich wieder erweiternden Rohrausgebildet sind. Es können ferner Flanschbverbindungen mit unterschiedlichsten Enderweiterungen hergestellt werden.

Nachfolgend werden Versuchsbeispiele zur Herstellung einer bestimmten Verformung von vernetztem Material der vorstehend beschriebenen Art angegeben.

*Beispiele:*

Feinverteiltes Polyäthylen wird mit 2,5 Gew.-% Dicumylperoxid gemischt und das erhaltene Gemisch wird in eine Druckkammer eingebracht und einem Hochdruck unterworfen. Die Temperatur des Materials am Druckkammerausgang betrug ca. 110° C. Das Material tritt durch Kanäle einer Strangpressvorrichtung und wird danach auf ca. 160° C erhitzt. Bei dieser Temperatur läuft die Vernetzungsreaktion schnell und vollständig ab, und es wird am Ausgang des Formwerkzeuges ein Rohr aus vernetztem Polyäthylen erhalten. Dieses Rohr wird im gleichen Arbeitsprozess kontinuierlich durch ein Formwerkzeug und anschliessend durch ein Wasserbad gezogen und gekühlt. Das Formwerkzeug bewirkt eine Reduzierung des Radius um mindestens 10, vorzugsweise 20%.

Bezeichnet man die Ursprungsformgebung mit A, so ergibt sich eine reduzierte Formgebung

$$B = A - \Delta A$$

wobei $\Delta A$ zwischen 10 und 20% liegt.

Die Erfindung wird anhand der Zeichnung näher erläutert. Hierbei zeigen:

Fig. 1 ein abgewinkeltes Formstück mit Flanschelement;

Fig. 2 ein Venturi-Rohr;

Fig. 3 ein Doppelrohrstück mit innenliegenden Abstandsringen;

Fig. 4 ebenfalls ein Doppelrohrstück, und

Fig. 5 a-e Bauteile eines Rohrabschnittes mit T-Anschluss.

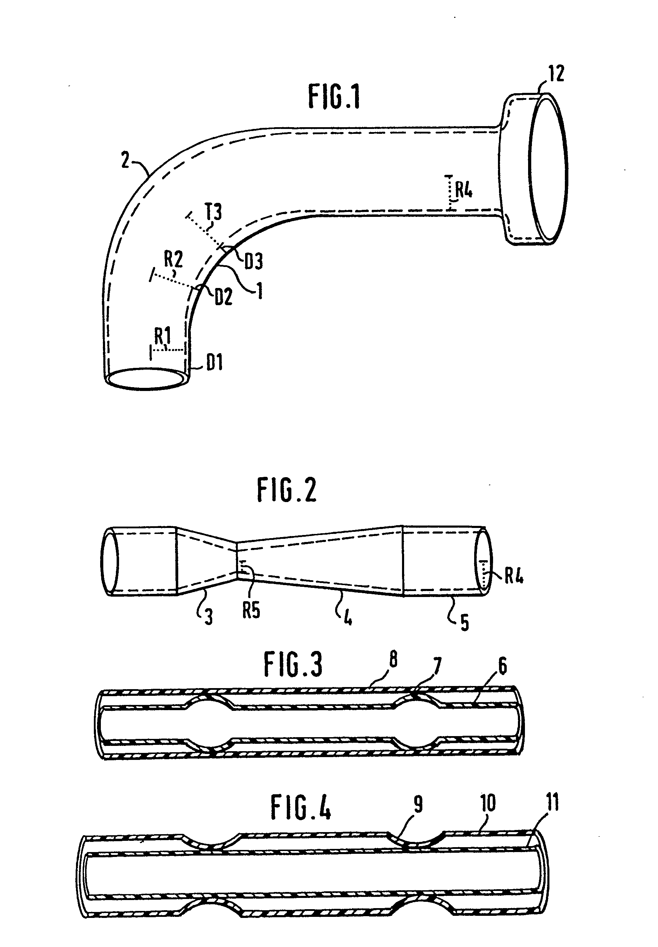

Soll beispielsweise eine Winkelverformungdurchgeführt werden, wie sie in der Fig. 1 dargestellt ist, so wird die Seite 1 des nach dem obengenannten Verfahren hergestellten Rohres mit Heissluft einer Temperatur von über 140° C eine Zeitlang bestrahlt. Während dieser Erwärmung findet eine Erweiterung des Querschnittes statt,wobei das Material bestrebt ist, die ursprüngliche Formgebung anzunehmen. Wird nun die Umfangsform des Rohres ungleichmässig erwärmt, so findet eine Abwinkelung des Rohres statt, da das Rohr durch den an sich bekannten Erinnerungseffekt bestrebt ist, auf der Seite 1 des Umfanges die Ursprungsdicke einzunehmen, während auf der kühleren Seite 2 dieser Zustand nicht mehr erreicht werden kann.

Durch diesen Erwärmungsprozess wird daher der Radius 1 des um 10 bis 20% reduzierten Rohres auf R 2 und schliesslich auf R 3 erweitert, während der Radius R 4 wieder mit dem Radius R 1 übereinstimmt. Entsprechendes gilt für die Wanddicke D 1 der um ebenfalls 10 bis 20% reduzierten Ursprungsstärke. Die Wandstärke D 3 stimmt daher etwa mit der Ursprungswandstärke überein und diese ist kleiner als D 2 und diese wiederum kleiner als die Wandstärke D 1. Auf diese Weise wird erreicht, dass gerade an der Winkelstelle ein grösserer Radius und eine grössere Wandstärke vorhanden sind, so dass dadurch die sonst bei Winkelstücken auftretenden Strömungsverluste durch Einengungen vermieden werden. Die Reduzierungen eines beispielsweise durch Strangpressen erzeugten Rohres können bis zu seiner Streckgrenze erfolgen, so dass bei einer entsprechenden späteren Wärmebehandlung der Ursprungszustand in der gleichen Grössenordnung wieder hergestellt werden kann.

Das so hergestellte Winkelstück zeigt eine bleibende Form, ohne dass irgendwelche Rückstellkräfte und damit Spannungen wirken.

In entsprechender Weise wird das ebenfalls in Fig. 1 dargestellte Flanschteil 12 hergestellt.

Ein weiteres Anwendungsbeispiel besteht darin, Metallrohre von innen mit Kunststoff zu beschichten, beispielsweise um bei bereits verlegten Rohren beschädigte oder poröse Stellen abzudichten.

Für diesen Zweck wird ein beispielsweise nach dem obengenannten Verfahren hergestelltes Polyäthylenrohr nach dem Strangpressverfahren um beispielsweise 10% reduziert, derart, dass das so reduzierte Rohr in das zu reparierende Metallrohr eingeführt werden kann. Die Länge des einzuführenden Rohres wird so gewählt, dass die zu reparierenden Rohrteile genügend weit überbrückt werden. Nach der Einführung des Kunststoffrohres wird diese Rohrkombination erwärmt, so dass das Kunststoffinnenrohr sich wieder um den reduzierten Betrag erweitert und sich an die Innenwandung eng anlehnt.

Durch diese Warmbehandlung entstehen ausreichende Kräfte, so dass auch eine gute Dichtung des Kunststoffrohres über den gesamten Umfang und in einer ausreichenden Länge an den Innenmantel des zu reparierenden Rohres erfolgt.

Ein weiteres Anwendungsgebiet ist die Herstellung von Venturi-Düsen aus einem Rohrstück. Eine solche Düse ist in Fig. 2 dargestellt. Eine Venturi-Düse besteht aus einem sich verengenden Rohrteil 3 und einem sich allmählich wieder erweiternden Rohrteil 4. Geht man von einem Ursprungsrohr 5 mit dem Durchmesser R 4 aus und reduziert ein solches Rohr auf den Durchmesser R 5, so lassen sich durch anschliessende Wärmebehandlungen die sich verengenden Rohrabschnitte 3 und sich allmählich wieder erweiternden Rohrabschnitte 4 in einfacher Weise herstellen. An den sich verengenden Stellen nimmt die Wandstärke 6 zu und ist an der engsten Stelle mit dem Radius R 5 am grössten. Hier treten auch die grössten Belastungen des Rohres auf.

Zur Herstellung weiterer gewünschter Formveränderungen von entsprechend reduzierten Rohren oder Schläuchen lassen sich auch entsprechend geformte Schablonen verwenden, in die die Rohrteile verlegt und anschliessend erwärmt werden, bis diese die durch die Form der Schablonen vorgegebene Ausgestaltung eingenommen haben. Damit lassen sich exakt wiederholbare Formveränderungen erzeugen, so dass auch eine Massenproduktion vorgeformter Rohrstücke oder dergleichen unter exakter Einhaltung vorgegebener Grössen ohne weiteres möglich ist.

Die Massnahmen nach der Erfindung können auch bei der Herstellung von Verbindungen mit Armaturen und Rohranschlüssen verteilhaft sein, so dass ggf. Dichtungsringe nicht benötigt werden. Hierzu reicht es aus, geringfügig reduzierte Schläuche zu verwenden, die an ihren Anschlussstellen entsprechend erwärmt werden, so dass dort eine vorgegebene Anpassung durch die Wärmebehandlung erzielt werden kann.

Die Erfindung lässt sich auch in vorteilhafter Weise für die Herstellung von Rohrsystemen anwenden, welche in Form von Doppelröhren mit Gasisolierkammern, vorzugsweise Luftkammern, ausgerüstet sind. Beispiele dieser Ausführungsform gehen aus den Fig. 3 und 4 hervor.

Wie aus der Fig. 3 ersichtlich ist, sind in vorbestimmten Abständen um den Umfang eines Rohres 6 Erweiterungen 7 vorhanden, welche im montierten Zustand innerhalb eines Aussenrohres 8 als Auflager und Dichtungen ausgebildet sind.

Auf diese Weise entstehen zwischen hintereinanderfolgenden Erweiterungen Gaskammern, welche eine hervorragende Isolierung aufweisen.

Zur weiteren Erhöhung der Isolation oder der Isolierwirkung kann bei diesen Anwendungsfällen die Reduzierung nach der Erfindung wesentlich mehr als 20% betragen.

In ähnlicher Weise lassen sich auch in vorbestimmten Abständen um ihren Umfang Einbuchtungen 9 eines Aussenrohres 10 herstellen, welche im montierten Zustand für ein Innenrohr 11 als Auflager und Dichtungen ausgebildet sind.

Eine solche Ausführungsform geht aus Fig. 4 hervor.

Das jeweils unverformte Rohr kann dabei aus Kunststoff oder auch Metall bestehen.

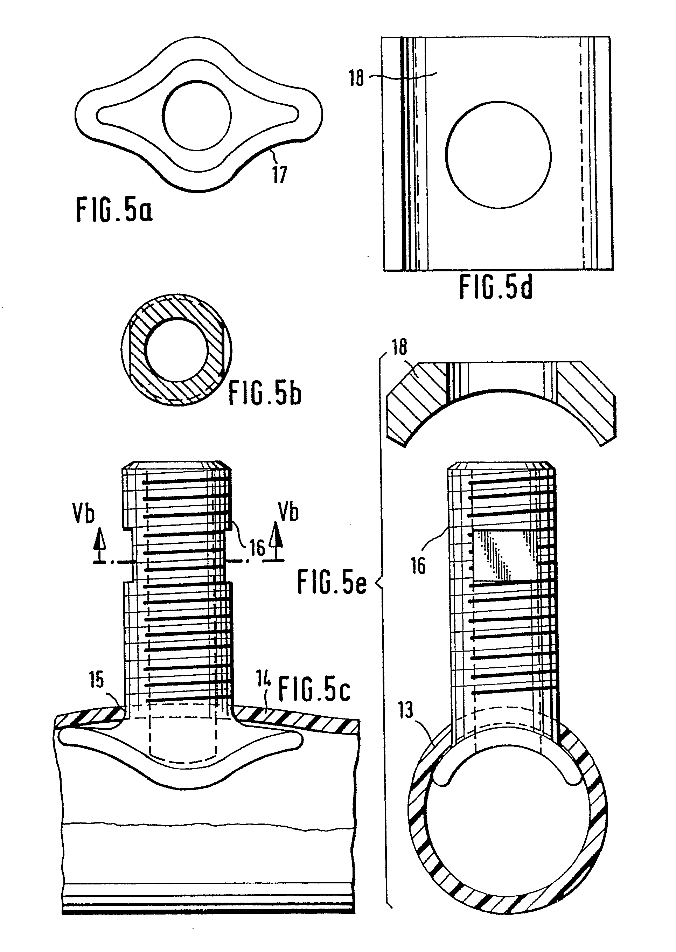

Die Fig. 5 a-e zeigen einen T-Anschluss, bestehend aus einem Schlauchanschluss 16, der mit seinem Formstück 17 durch eine Bohrung 15 des Rohrabschnittes 14 geführt ist. Mit Hilfe eines Druckstückes 18 und nicht näher dargestellter Schraubelemente wird der Schlauchanschluss 16 mit dem Rohrabschnitt 13 zu einem T-Anschluss verspannt. Der Schlauchanschluss 16 ist daher mit einem Gewinde versehen, so dass das Druckstück gegen den Rohrabschnitt 13 verspannt wird, wobei das in dem Rohrabschnitt 13 befindliche Formstück 17 die Verspannung ermöglicht. Die Herstellung des T-Anschlusses erfolgt dabei dadurch, dass der entsprechende Rohrabschnitt erwärmt wird, so dass dieser erwärmte Teil in seine Ursprungsform übergeht. Sodann wird die Bohrung 15 hergestellt, und zwar in einer Grösse, die dem Durchmesser des Schlauchanschlusses 16 entspricht. Der Schlauchanschluss 16 ist mit dem Formstück 17 integral verbunden, welches mit seiner ovalen Form durch die Bohrung 15 der noch im warmen Zustand befindlichen Umrandung derselben geführt wird, wobei sich der Rohrabschnitt 13 bei seiner Erkaltung dem Formstück 17 voll anpasst. Nach Erkaltung der Umgebung des Bohrloches wird das Druckstück 18 über den Schlauchanschluss 16 geführt und mit Hilfe von Verschraubungselementen verspannt, so dass ein fester und dichter T-Anschluss entsteht. Die Formgebung des Rohrabschnittes 13 lässt sich dabei so durchführen, dass kein oder nur ein geringer Strömungswiderstand in dem Rohrabschnitt 13 entsteht.

Ein besonderer Vorteil dieses Verfahrens besteht darin, dass ein T-Anschluss auch bei verlegten Leitungen hergestellt werden kann, ohne dass eine Demontage durchgeführt werden muss. Der Schlauchanschluss 16 besteht dabei vorzugsweise aus Metall, ebenso wie das Druckstück 18 und die nicht näher dargestellten Verschraubungselemente.

## Patentansprüche

1. Verfahren zur Herstellung eines rohrförmigen Gegenstandes, wobei ein Thermoplast in Form eines Pulvers oder Granulats unter Zusatz von chemischen Vernetzungsmitteln sowie Zusatz- und Hilfsstoffen in einer Druckkammer einem Hochdruck unterworfen wird, wodurch die Temperatur der Mischung auf ca. 110° C ansteigt, worauf die Mischung durch Kanäle einer Strangpressvorrichtung geführt und noch innerhalb der Strangpressvorrichtung auf Vernetzungstemperatur erwärmt wird, dadurch gekennzeichnet, dass der extrudierte Hohlstrang im gleichen Arbeitsprozess kontinuierlich durch ein Formwerkzeug gezogen wird, wodurch eine Verstreckung des Hohlkörpers um mehr als 10, vorzugsweise 20%, erfolgt, und in der gestreckten Form gekühlt und damit in dieser Form fixiert wird, der so erhaltene Hohlstrang wird auf Länge geschnitten und partiell über den Kristallitschmelzpunkt erwärmt, worauf die erwärmte Stelle auf die in der Strangpresse festgelegte Form zurückstrebt und so den rohrförmigen Hohlkörper bildet.

2. Verfahren nach Anspruch 1, dadurch gekennzeichnet, dass die Wärmebehandlung des Kunststoffproduktes mit Hilfe eines Luftstromes einer Temperatur von über 140° C erfolgt.

3. Verfahren nach einem der Ansprüche 1 oder 2, dadurch gekennzeichnet, dass zur Herstellung einer bleibenden Rohrerweiterung, Rohrbiegung oder Rohrabwinkelung das gestreckte Rohr an den zu verformenden Stellen partiell erwärmt wird.

## Claims

1. Method for the preparation of a tubular article, whereby a powdered or granulated thermoplast in admixture with chemical crosslinking agents as well as additives or accessory substances are inserted in a pressure chamber and exposed to a higher pressure, thereby the temperature of the mixture is passed through the conduits of an extrusion installation and is heated to threshold temperature within the extrusion installation, thereby characterized, that the extruded tubular pipe is drawn continuously through the conduit of a shaping tool during the same procedure, thereby stretching the hollow body by more than 10, preferably 20%, and is cooled in the stretched form and therewith fixed in this form, the hollow body therewith obtained is cut in wanted lengths and partially heated above the cristalline melting point of the substance, after which the heated area tends to return to the form determined by the extruder, and forms the tubular hollow body.

2. Method according to Claim 1, thereby characterized, that the heat treatment of the plastic is made with the help of an air stream of a temperature above 140° C.

3. Method according to Claim 1 or 2, thereby characterized, that for the production of a permanent tube expansion, a tube-turn or a tube-bending the stretched tube is partially heated at the area to be deformed.

## Revendications

1. Procédé de fabrication d'un article tubulaire, dans lequel une matière thermoplastique sous la forme d'une poudre ou de granules est soumise à une haute pression dans une chambre à pression avec addition d'agents chimiques de réticulation ainsi que d'additifs et de substances auxiliaires, la température du mélange s'élevant ainsi à environ 110° C, après quoi on fait passer le mélange à travers des canaux d'un dispositif de boudinage et, alors qu'il est encore à l'intérieur de ce dernier, il est chauffé à la température de réticulation, caractérisé en ce que, dans le même processus de travail, le boudin creux extrudé est continuellement étiré par un outil de façonnage, si bien que le corps creux subit un étirage de plus de 10, de préférence 20%, tandis qu'il est refroidi sous la forme étirée et qu'ainsi il est fixé sous cette forme, le boudin creux ainsi obtenu étant découpé à longueur et chauffé localement au-delà du point de fusion des cristallites, à la suite de quoi l'endroit chauffé tend à revenir à la forme fixée dans la boudineuse, formant ainsi le corps tubulaire creux.

2. Procédé suivant la revendication 1, caractérisé en ce que le traitement thermique du produit en matière synthétique a lieu à l'aide d'un courant d'air porté à une température de plus de 140° C.

3. Procédé suivant l'une des revendications 1 ou 2, caractérisé en ce que, pour réaliser un élargissement, un coude ou un pliage permanent dans le tube, on chauffe localement le tube étiré aux endroits à déformer.

**FIG.1**

2

T3

R2

R4

D3

D2

1

R1

D1

12

**FIG.2**

R4

3

R5

4

5

**FIG.3**

8

7

6

**FIG.4**

9

10

11

FIG.5a

17

FIG.5b

FIG.5d

18

18

FIG.5e

16

13

Vb

Vb

16

15

14 FIG.5c